# EUROPEAN PATENT SPECIFICATION

(11) **EP 2 605 960 B1**
(45) Date of publication and mention of the grant of the patent: **29.07.2015**
(21) Application number: 11748271.1
(22) Date of filing: 16.08.2011
(51) Int. Cl.: B64C 3/18, B32B 3/26

(54) **A REINFORCEMENT DEVICE FOR THE PURPOSE OF REINFORCING A MAIN LOAD-BEARING COVERING PANEL AND MAIN LOAD-BEARING COVERING PANEL**
VERSTÄRKUNGSVORRICHTUNG ZUR VERSTÄRKUNG EINER HAUPTLASTTRAGENDEN DECKPLATTE UND HAUPTLASTTRAGENDE DECKPLATTE
DISPOSITIF DE RENFORT POUR RENFORCER UN PANNEAU DE COUVERTURE PORTEUR DE CHARGE PRINCIPAL, ET PANNEAU DE COUVERTURE PORTEUR DE CHARGE PRINCIPAL

(30) Priority: 16.08.2010 US 374058 P; 16.08.2010 DE 102010035461
(43) Date of publication of application: 26.06.2013
(73) Proprietor: Airbus Operations GmbH, 21129 Hamburg (DE)
(72) Inventor: GILLESSEN, Alexander, 21680 Stade (DE); ZUARDY, Ichwan, 21073 Hamburg (DE); ZAHLEN, Pierre, 21680 Stade (DE)
(74) Representative: UEXKÜLL & STOLBERG
(86) International application number: PCT/EP2011/004116
(87) International publication number: WO 2012/022465

(56) References cited:
- US-A- 3 229 935
- US-A- 5 332 178

## Description

This application claims the benefit of the filing date of German Patent Application No. DE 10 2010 035 461.9 filed 16.08.2010 and of United States Provisional Patent Application No. US 61/374,058 filed 16.08.2010.

The invention concerns a reinforcement device for the purpose of reinforcing a main load-bearing covering panel, also a corresponding main load-bearing covering panel, a structural component of a flow body, and also a corresponding flow body. Here the reinforcement device serves the purpose of accommodating and transferring forces and/or stresses in the interior of the covering panel.

Reinforcement devices of this type are in principle of known art. They find deployment, for example in covering panels, which are constructed in a multi-layer manner, in particular in the form of a sandwich structure. Such sandwich structures are customary in the production of covering panels and normally have a lower skin section and an upper skin section, which are areally connected with one another via a core layer located between them. Document US5332178, which is considered to be the closest prior art, discloses such a device.

The object of the present invention is to solve the problems cited above of the devices of known art. In particular it is the object of the present invention to provide a reinforcement device that is light and simple as well as cost-effective to manufacture, and at the same time enables load transfer, i.e. reinforcement against stresses in the normal force direction, and also in the shear force direction in the core layer of a covering panel.

The above object is achieved by means of a reinforcement device with the features of the independent claims. Also a subject of the present invention is a structural component of a flow body in accordance with the features of the independent claim 11, as well as a flow body with the features of the independent claim 13. Advantageous forms of embodiment ensue in particular from the dependent claims that follow the independent claims.

The reinforcement device according to the invention can be deployed for example in covering panels, which are constructed in a multi-layer manner, in particular in the form of a sandwich structure. Such sandwich structures can be used for the production of covering panels and in particular has a lower skin section and an upper skin section, which are areally or superficially connected, this means surface to surface, with one another via a core layer located between them. The reinforcement devices are arranged within this core layer, and extend through this core layer along the areal connection between core layer and the respective skin section. The reinforcement devices thereby serve the purpose of accommodating and redirecting loads and forces onto one of the two skin sections, in particular in the thrust or tension directions. For example, in this manner it is possible for impacts of objects onto one of the two skin sections, and the normal stresses thereby arising in the skin section and the core layer located underneath, to be transferred via a reinforcement device. The advantage of the solution of the invention is that the reinforcement device which can be realized by it provides stiffening and reinforcement in the normal force direction and also an additional stabilisation with regard to the crosswise forces, that is to say, transverse forces, occurring in the core layer, as according to the invention a profiled beam is used which does not have a rectangular cross-section.

An inventive reinforcement device for the purpose of reinforcing a main load-bearing covering panel thereby has at least two profiled beams. The profiled beams have in each case a profile cross-section, which is bounded by at least three side surfaces. In other words therefore, the profiled cross-section is at least triangular, but can also have a plurality of corners. Needless to say, it is also possible for the profile cross-section to alter along a longitudinal dimension of the respective profiled beam, and in this manner side surfaces are provided that need not necessarily form a single plane in every case. Between each pair of side surfaces a side surface angle is subtended, wherein at least two adjacently located side surfaces are arranged relative to one another such that the side surface angle subtended by them is formed as an acute angle. In the case of a triangular profile cross-section this means that an acute angle is present in at least in one of the angles of the triangle in the profile cross-section.

Advantageously between at least two adjacently located side surfaces, wherein one of these side surfaces can also be the side surface relating to the acute angle, an angle in the range between 85 and 95°, in particular a right angle, is provided.

Furthermore for each profiled beam at least one ensheathment is provided, which has one or a plurality of fibres or rovings, at least in one or a plurality of sections. These fibres or rovings are arranged along the side surfaces of the respective profiled beam, and rotate around the latter. The arrangement along the side surfaces of the profiled beam and the corresponding rotation is therefore to be understood to mean a wound or woven configuration of the fibres or rovings around the profiled beam, which essentially runs along the edges of the profile cross-section in a two-dimensional view, that is to say, around the profile cross-section. In a particularly simple manner the fibres or rovings are thereby wound around the profiled beam. The fibres or rovings serve the purpose of further improving the accommodation of force and/or stress by the profiled beam. As a result of the rotation around the profiled beams in particular a friction force fit can be achieved, because of an at least partially shape-deforming connection between the fibres or rovings and the respective profiled beam, so that a force, or a combination of the two forces, and/or stress, can be accommodated in different directions by different components, that is to say, either by a profiled beam, or by the respective fibres.

Here it can be advantageous if the respective fibre or roving is turned around the profiled beam with a certain internal level of stress. Depending upon the force that is anticipated and/or the stress conditions, such an internal stress can be of practical benefit in providing a pre-stressing of the fibre in the deployment of an inventive reinforcement device, so as to improve even further the accommodation of force and/or stress.

In this context "roving" is to be understood to mean a bundle of continuous carbon filaments or electrically conducting cables, which can be untwisted and/or stretched in the roving. The cables can thereby in particular be formed from electrical conductors, such as e.g. metallic conductors, sheathed in glass fibres. The individual electrically conducting filaments can be formed from carbon filaments and/or carbon fibres and/or metallic alloys and/or from glass fibres with e.g. a metallic coating. The rovings can, in particular, also be formed exclusively from fibres, and in particular from carbon fibres. The rovings can be provided with or without a matrix material. Here, for the inventive rovings used, materials can be used in the form of continuous rovings, continuous yarns, continuous twisted yarns, continuous twines, continuous fabrics, continuous woven fabrics, continuous cords, pre-impregnated so-called pre-pregs, or continuous knitted fabrics. Such continuous rovings can for purposes of use in the inventive method be wound onto spools or drums, in order to take off from the latter rovings in suitable lengths for purposes of application of the inventive method.

In other examples of embodiment of the invention a "roving" can in accordance with the invention also be formed from a plurality of rovings, which in such cases are sub-rovings. In particular the sub-rovings can thereby be interwoven or twisted with one another. In this context such a combination of a plurality of sub-rovings, which need not run in a single plane, is understood to be a "bundle of rovings".

Moreover, the two profiled beams are arranged relative to one another such that two side surfaces of each profiled beam are opposed to one another, in each case having at least one arm of an acute side surface angle. In other words the two side surfaces are located opposite to one another, and when deployed are essentially arranged at an oblique angle with reference to the skin sections. In a particularly simple form of embodiment there thus ensues for an inventive reinforcement device a general overall cross-section that can, for example, be rectangular. This overall cross-section is formed by the individual profile cross-sections of the profiled beams, which can, for example, be of triangular form. This overall cross-section can therefore be defined as a combination in one plane of the profile cross-sections of the profiled beams. As a result of the triangular design and the location next to one another of the obliquely positioned side edges of the triangles in the profile cross-sections of the respective profiled beams, a diagonal is thus generated across the overall cross-section; in such cases the latter is an essentially rectangular profile cross-section of the reinforcement device. Forces and stresses can now likewise be accommodated along these diagonals; this is not possible in reinforcement devices of known art. In this manner, by virtue of the positioning of at least two adjacently located side surfaces, it is made possible for an additional direction of reinforcement to be created by means of the respective profiled beams. In the formation of the reinforcement device in conjunction with a further profiled beam a reinforcement device thus ensues, which, in addition to the functionalities of the reinforcement devices of known art, includes an additional functionality, namely the accommodation of forces or stresses in an additional direction, in particular in the direction of the transverse stresses.

Here the profiled beams themselves can be of different designs. Thus it is conceivable that one is dealing here with open or closed profiles, the internal volume of which can be filled or hollow. In particular in circumstances of deployment in which the aim is the least possible weight, a filling with a low self-weight, for example, a foam material, or even a hollow void in the interior of the profiled beam, can be of advantage. The end faces of the respective profiled beams can thereby be open or closed. Open end faces of the respective profiled beams have the advantage, that after the insertion of the profiled beams during the production process of a main load-bearing covering panel, during the generation of a foam-type core layer of the covering panel these can also be filled with foam from the interior, in particular without a separate step in the manufacturing process. Pre-filling of the internal volume of the profiled beams is not necessary in such a form of embodiment, which improves the economy of the method overall.

As a result of the at least one positioned side surface at least two directions of force transfer and/or stress accommodation are thus defined by means of a reinforcement device in accordance with the present invention. Each of the side surfaces, which, in accordance with the inventive arrangement of the respective profiled beams relative to one another, together form the overall cross-section of the reinforcement device, including possible diagonals across this reinforcement device, can accommodate force and/or stress in the overall cross-section. In the simplest case a triangular profiled cross-section is provided for each respective profiled beam, so that force and/or stress can be accommodated along each direction of the profiled beam. Thus the functionality with reference to reinforcement devices of known art is improved by a half, since instead of one direction, two directions can now be covered. This is in particular advantageous in that the third direction is not aligned normally with reference to the alignment of the respective skin section of the main load-bearing covering panel, but rather is aligned crosswise by the angled positioning of the respective side surface with an acute angle. In this manner shear stresses and/or transverse stresses in the interior of the main load-bearing covering panel can also be accommodated by means of a reinforcement device of the present invention. Forces and/or stresses in the transverse direction can thus be accommodated in exactly the same manner as forces and/or stresses in the normal direction.

The fibres or rovings, which serve to provide the ensheathment of each profiled beam, can, for example, consist of fibre-reinforced plastic. Here the term "fibre" is to be understood to mean that the dimension of such a fibre along its axis is significantly greater than the dimension of its cross-section with reference to this axis. Thus such fibres or rovings can in particular be designed in the form of cables, but can have a very wide range of cross-sections. Moreover such fibres or rovings can have different lengths and can be formed from more than a single chemical material component. In particular fibre-reinforced plastic, which contains short reinforcement fibres, such as, for example, glass fibres or carbon fibres, can by means of a plastic matrix, or a resin matrix, be bound into long fibres in the context of the present invention. It is also possible to use pre-impregnated fibres, which are known as pre-pregs. These inventive fibres are then laid around the respective profiled beams so that they rotate around the side surfaces of the latter.

It can be advantageous if the two profiled beams are essentially identical in design to one another. In other words a symmetry can be created in this manner along an axis of symmetry and/or a surface of symmetry that is located essentially parallel to the respective side surface of each profiled beam, which in the inventive arrangement is located opposite to the corresponding side surface of the opposing profiled beam. As a result of the essentially identical configuration of the profiled beams the overall complexity of an inventive reinforcement device can be reduced, as a result of which complexity and thus production costs can be saved in the manufacturing process and also in the production process of a main load bearing covering panel.

It can be of advantage if in an inventive reinforcement device the alignment of the fibres or rovings of the ensheathment is executed such that a fibre angle of 85 to 95° is subtended between the respective fibre and a side edge formed by the abutment of two side surfaces. In the case where the profile cross-section for the respective profiled beam id a triangle this signifies that this triangular profile cross-section is an essentially right-angled triangle. In such a right-angled triangle the hypotenuse is located opposite the right angle and thus forms in particular a part of the side surface that is located opposite to the corresponding side surface of the second profiled beam in the inventive arrangement. In this manner reinforcement devices can in particular be manufactured, in which both normal forces, that is to say, forces introduced essentially at right-angles into the main load-bearing covering panel, and also crosswise forces and/or transverse or shear forces, which occur in the material of the core layer, can be transferred. Moreover transverse and/or shear stresses also arise crosswise to this normal stress profile as a result of such normal forces being introduced, or as a result, for example, of the impact of an object on such a main load-bearing covering panel; in particular these run at an acute angle to this normal stress. These stresses can be accommodated by the respective profiled beam along the positioned and/or angled side surface, and also by the ensheathment running along this side surface. Thus such a form of embodiment is further improved in that all side surfaces are essentially positioned in an optimal manner relative to the forces whose introduction is anticipated, and relative to the stresses arising in the material of the main load-bearing covering panel. The side surfaces that are essentially at right-angles are optimised for the transfer of normal forces, while the angled side surfaces of the profiled beams are optimised for the transfer of the transverse or shear forces.

It can be advantageous if in an inventive reinforcement device the side surfaces of each profiled beam are arranged relative to one another such that a profile cross-section in the form of a right-angled triangle is formed. Such a right-angled triangle is in particular an isosceles triangle, so that the overall cross-section of the reinforcement device in accordance with the inventive arrangement of the two profiled beams has an essentially square shape. With the design of a triangle, in particular of a right-angled triangle, in particular of a right-angled triangle of isosceles structure, the material consumption for the achievement of the inventive advantages can in this manner be reduced to a minimum. With a minimum material consumption the inventive force transfers thus occur in two directions.

Furthermore it can be of advantage if in an inventive reinforcement device the at least one acute side surface angle is designed such that the opposing side surfaces of the two profiled beams when deployed in the main load-bearing covering panel extend along the direction of the greatest transverse stress occurring in the main load-bearing covering panel when under load. This can, for example, be the case if the acute side surface angle is located in the range between 30 and 60°. With a design of the side surface angle in particular in a range around 45° in addition an essentially symmetrical arrangement of the two profiled beams relative to one another can be ensured. In this manner at one and the same time the quantity of material required and the volume for the deployment and/or production of an inventive profiled beam can be reduced to a minimum. The ideal value for the at least one acute side surface angle lies accordingly in the range around 45°, in particular with a deviation of +/- 10 % from this value. Advantageously such a form of embodiment takes the form of an isosceles right-angled triangle. In this manner an overall cross-section for the reinforcement device ensues that is essentially square, namely by means of the combination of the two isosceles, right-angled, triangular profile cross-sections of the two profiled beams. The respective side surface for the purpose of accommodating the transverse stress extends thereby as a diagonal across the square overall cross-section, since on both sides a 45° angle subtends the corresponding side surface and the adjacent side surfaces. In other words the side surfaces of the respective profiled beam that are located opposite one another include the hypotenuse of the triangular profile cross-section in each case.

Also it can be advantageous if in an inventive reinforcement device the fibres or rovings of the ensheathment are wound at least in one or a plurality of sections around the respective profiled beam. The provision of a wound configuration for the fibres or rovings has the advantage that this can be generated in a particularly simple manner. Thus it is possible for the fibres or rovings to be actively wound around a stationary profiled beam. However it is also conceivable for the fibres or rovings, for example fed from a roll, to be wound onto the profiled beam as the latter rotates about its own longitudinal axis. Here it is particularly advantageous if the fibres or rovings are wound around the corresponding profiled beam along a pitch so that no fibre lies on another fibre, but fundamentally is located further along the respective side surface alongside the adjacent fibre, that is to say, alongside itself. In this manner an appropriate profiled beam can be manufactured particularly simply and thus particularly cost-effectively for purposes of the inventive arrangement in a reinforcement device.

Alternatively or additionally it is possible that in an inventive reinforcement device the fibres or rovings of the ensheathment are woven at least in one or a plurality of sections around the respective profiled beam. Such weaving can take place in a similar manner to that which has already been described in relation to the winding process. Thus either the fibres themselves and/or the respective profiled beam can be moved, in particular rotated. In this manner the ensheathment itself becomes more robust, and can in particular be secured against any displacement on the profiled beam. The provision of a woven configuration for the fibres or rovings has the further advantage that in this manner additional stiffening takes place in a three-dimensional direction. Moreover the fibre orientation on the respective profiled beam is accurately defined, so that this is not lost, even in the event of foaming a core layer into the main load-bearing covering panel.

In both cases, that is to say, independently of whether manufacture is by means of winding or weaving, it can be advantageous if the fibres or rovings rotate around the profiled beam under internal stress. The internal stress, that is to say, winding under stress, or rotation of the respective profiled beam under stress, has the advantage that as, for example, in the case of a screw under tensile stress, stress already accommodated increases the resistance of the respective profiled beam with ensheathment to forces in the respective direction.

Furthermore it can be of advantage if in an inventive reinforcement device at least one of the side surfaces and/or at least one of the side edges formed by the abutment of two side surfaces of at least one of the profiled beams has a curvature in at least one direction. This curvature is advantageously configured such that this corresponds to a curvature of a surface of a structural component, which is covered with a main load-bearing covering panel reinforced by at least one reinforcement device. In this manner a curvature of the respective main load-bearing covering panel can be generated, which follows a curvature of the corresponding structural component. In other words, for this reason the profile cross-section of the corresponding profiled beam in individual cases is also not constant over the course along the longitudinal direction of the profiled beam, so that one is dealing, so to speak, with a variable profile cross-section for the profiled beam. The curvature of the profiled beam can generate this variable profile cross-section. Here it can be advantageous if only the edge or also the whole side surface of the respective profiled beam is curved. It is, however, advantageous if the side surfaces of the respective profiles beams that are opposing one another in accordance with the inventive arrangement are not curved, but can lie essentially flat against one other. In principle the curvature can thereby occur about each of the dimensional axes of the respective profiled beam, so as to enable matching of the curvature that is as flexible as possible, independently of the functionality of accommodation of forces or stresses in two directions.

A further subject of the present invention is a main load-bearing covering panel for a structural component of a flow body. This covering panel is designed as a sandwich and has an inner skin section and an outer skin section, and also a core layer located between them, accommodating transverse load. This core layer, accommodating transverse load and/or transverse force, areally connects the inner and outer skin sections together. Here the terms "inner" and "outer" relate to the function of the main load-bearing covering shell for the purpose of covering a structural component. Thus in the deployment of the main load-bearing covering panel one of the two skin sections of the sandwich is orientated inwards with reference to the structural component, while the other skin section is orientated outwards, and forms, so to speak, the outer skin. Furthermore such a main load-bearing covering panel is distinguished by the fact that it has a plurality of inventive reinforcement devices for the purpose of controlling transverse stress in the core layer.

Such a main load-bearing covering panel can, for example, be manufactured such that the intermediate space between the two skin sections is filled with a foam material. In this manner the reinforcement devices can also, so to speak, be encased with foam in the core layer, so that the position of the reinforcement device in the interior of the core layer is defined by the foam filling process during the manufacture of the covering panel. Thus in the deployment of the main load-bearing covering panel its position and alignment, and thus also the alignment of the corresponding side surfaces, are unambiguously defined for the purpose of accommodation of forces and/or stresses. An inventive main load-bearing covering panel thus brings with it the same advantages that have already been elucidated in detail with regard to an inventive reinforcement device. In particular this is the possibility of being able to accommodate forces and/or stresses in a total of two directions. In addition to the accommodation of normal stresses this also includes the accommodation of transverse stresses and/or shear stresses, in particular transverse stresses that are introduced into the covering panel at an essentially acute angle to the corresponding skin section.

It can be advantageous if in an inventive main load-bearing covering panel the individual reinforcement devices are integrated into the core layer of the main load-bearing covering panel such that side surfaces of the profiled beams that are at right-angles to the width direction of the profiled beams of each of the adjacent reinforcement devices are in each case located opposite one another. This is in particular advantageous if the overall cross-section of the reinforcement devices takes the form of a rectangular cross-section, in particular a square cross-section. In this manner the reinforcement devices are located in the normal direction, that is to say, along the shortest distance connecting the two skin sections, so that the normal stresses and/or normal loads can be transferred along these side surfaces. The abutment of two reinforcement devices is thus independent in each case of the inventive arrangement of the profiled beams along the angled side surfaces in an inventive reinforcement device. Furthermore the corresponding side surfaces of the adjacent reinforcement devices are in particular located opposite one another in an essentially parallel manner. In this manner the distance separating the individual reinforcement devices from one another in the width direction of the profiled beams can be minimised.

It can be a further advantage if, in a main load-bearing covering panel, the magnitude of the at least one acute side angle of each profiled beam of one reinforcement device differs from the magnitude of the at least one acute side surface angle of each profiled beam of at least one other reinforcement device. In other words the side surface angles alter in this manner from reinforcement device to reinforcement device, in particular in combination with an arrangement such as has been elucidated in the above paragraph. With a correlation of each of the side surfaces positioned at right-angles of the adjacent profiled beams, and with the differing positioning of the corresponding side surface angles in the interior of a reinforcement device, a curvature of the main load-bearing covering panel can be reproduced by the arrangement of the individual reinforcement devices. Despite the reproduction of these curvatures, no unnecessarily large gaps exist between the individual reinforcement devices as a result of matching the side surface angles, in particular as a result of their variation. Rather the essentially right-angled side surfaces follow the alignment with the curvature so that the normal load can essentially always be accommodated along the shortest distance connecting the two skin sections.

A further subject of the present invention is a structural component of a flow body, with at least one inventive main load-bearing covering panel. Furthermore, such a structural component has a supporting structure for purposes of attaching the covering panel. In other words, the covering panel thus serves in particular the purpose of covering the supporting structure, but in addition a main load can be carried by the covering panel, and the impact of objects can be intercepted. The covering panel thus serves in addition the purpose of stiffening the supporting structure thus covered, and has all the advantages that have been elucidated above with reference to an inventive covering panel, and with reference to an inventive reinforcement device.

Furthermore a subject of the present invention is a flow body, with an inventive structural component, which is enclosed in at least one or a plurality of sections by an inventive main load-bearing covering panel. Such a flow body has the same advantages that have already been elucidated with reference to the structural component, and with reference to the main load-bearing covering panel, and with reference to an inventive reinforcement device.

The present invention is elucidated in more detail with the aid of the accompanying figures. Here the terms used, "left-hand", "right-hand", "above" and "below", relate to an alignment of the figures with normally readable reference symbols. Here:
- Figure 1: shows a profile cross-section of a first form of embodiment of a profiled beam
- Figure 2: shows an isometric representation of the form of embodiment as per Figure 1
- Figure 3: shows a reinforcement device with two profiled beams already arranged in accordance with the invention
- Figure 4: shows a main load-bearing covering panel reinforced by means of three reinforcement devices of a further form of embodiment
- Figure 5a: shows an isometric representation of a further form of embodiment of a profiled beam
- Figure 5b: shows an isometric representation of a covering panel, with a reinforcement device of Figure 5a
- Figure 6: shows a further form of embodiment of an inventive covering panel

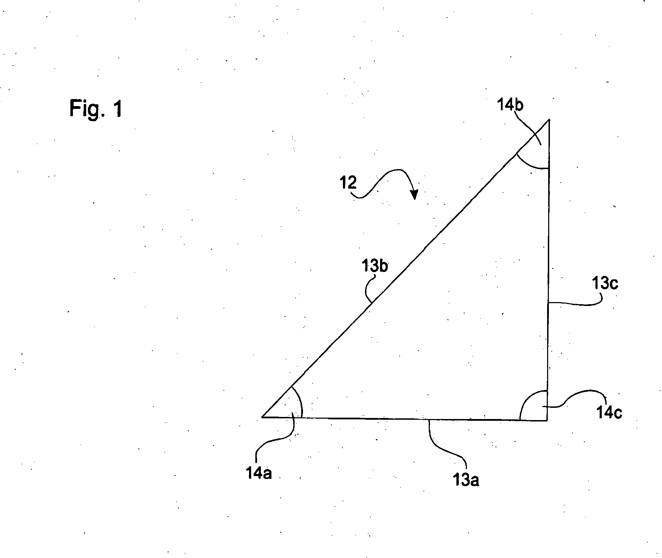

Figure 1 represents in cross-section a first form of embodiment of an inventive profiled beam 12. The profiled beam 12 has a triangular profile cross-section, as can be discerned in Figure 1, and extending in a beam longitudinal direction L. Here the triangular cross-sectional shape is bounded by three side surfaces 13a, 13b and 13c extending in the beam longitudinal direction L. By virtue of the cross-sectional representation in Figure 1 the respective side surfaces 13a, 13b and 13c can only be discerned in the form of lines. Corresponding side surface angles 14a, 14b and 14c are present between each pair of adjacent side surfaces 13a, 13b and 13c. Here the side surface angles 14a, 14b and 14c differ from one another. The side surface angles 14a, and 14b are acute angles, as a result of which the side surface 13b, which extends between these two angles, that is to say, forms one arm of each of the two angles 14a and 14b, is inclined. In other words the side surface 13b in cross-section as per Figure 1 takes the form of the hypotenuse of the triangle of the profile cross-section that in this case is right-angled. Opposite this hypotenuse of the side surface 13b is located what is essentially a right angle 14c, that is to say, an angle 14c between the adjacent side surfaces 13a and 13c, which is essentially 90°. Here "essentially 90°" means that in the technical sense, that is to say, in terms of what can be manufactured, it forms a right angle. In particular it can be an angle, which, as the side surface angle 14c, lies in the range between 85° and 95°. In order to obtain a symmetrical configuration of the reinforcement device 10 it can be advantageous if the two other side surface angles 14a and 14b are essentially identical; the profile cross-section of the profiled beam 12 thus takes the form of an Isosceles triangle.

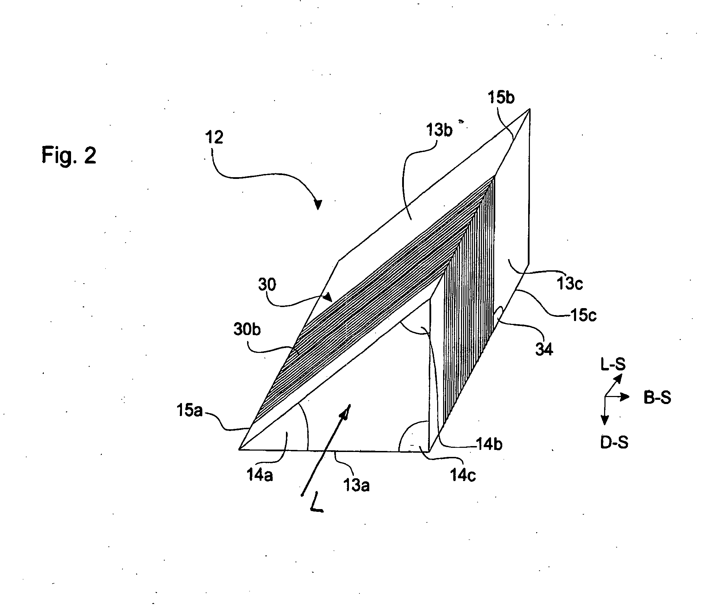

Figure 2 shows a profiled beam 2 with a profile cross-section as has already been elucidated with reference to Figure 1. Here too this takes the form of a triangular profile cross-section of the profiled beam 12, which has two acute angles, 14a and 14b, and also what is essentially a right angle 14c. In the isometric representation of Figure 2 the longitudinal dimensions of the three side surfaces 13a, 13b and 13c can also be discerned.

With regard to the profiled beam 12, this is located in a coordinate system that is fixed with reference to the profiled beam 12, with dimensions essentially in the three coordinate directions of such a coordinate system. Here the longitudinal dimension L-S runs essentially along the side surfaces 13a, 13b and 13c, that is to say, along the side edges 15a, 15b und 15c formed by the abutments of these respective side surfaces 13a, 13b and 13c. A thickness direction D-S runs essentially along the side surface 13c and at right-angles to the longitudinal direction L-S. A third direction is defined as a width direction B-S, which extends at right-angles to the plane defined by the thickness direction D-S and the longitudinal direction L-S. In what follows the corresponding alignments, and curvatures, are described with the aid of this coordinate system.

Furthermore it can be discerned in Figure 2 that an ensheathment 30 is provided for the profiled beam 12 in at least one or a plurality of sections. Here the ensheathment 30 has at least one fibre 30b, which is wound around the profiled beam 12. Here the winding is executed such that the fibre 30b does not rest against itself, but rather is wound around the profiled beam 12 in the form of a spiral, i.e. in the form of a helix, which winds around the axis of the profiled beam 12 in the direction of the longitudinal direction L-S. Thus the ensheathment 30 is formed in the region of the winding of the fibre 30b.Here in particular the fibre 30b is wound around the profiled beam 12 under internal stress, that is to say, under tension, so that a tension exists between the fibre 30b, that is to say, between the ensheathment 30, and the profiled beam 12, in particular its side surfaces 13a, 13b and 13c.

A fibre angle 34 is defined between the fibres or rovings 30b and the edges of the profiled beam 12, which are formed by the abutments of each of the adjacent side surfaces 13a, 13b and 13c.The fibre angle 34 is essentially designed as a right angle. The right-angled design of the fibre angle 34 has the advantage that in this manner a fibre dimension ensues that runs along the side surface 13c, essentially along the thickness direction D-S of the profiled beam 12, and also on the side surface 13a, essentially along the width direction B-S of the profiled beam 12. Forces that are introduced into a main load-bearing covering panel B and extend along a normal between the two skin sections 32, as elucidated later with reference to the following figures, can accordingly be intercepted via the fibres or rovings 30b on the side surface 13c. Forces running at right-angles to the latter are accommodated by fibres or rovings 30b along the side surface 13a. The two side surfaces 13a and 13c thus provide the facility for interception of the corresponding normal forces by means of the ensheathment 30 arranged thereon. In addition, the fibres or rovings 30b on the side surface 13b of the profiled beam 12 provide an additional direction for the facility for interception of forces and/or stresses that occur essentially in the primary direction of shear stresses and/or transverse stresses in a main load-bearing covering panel.

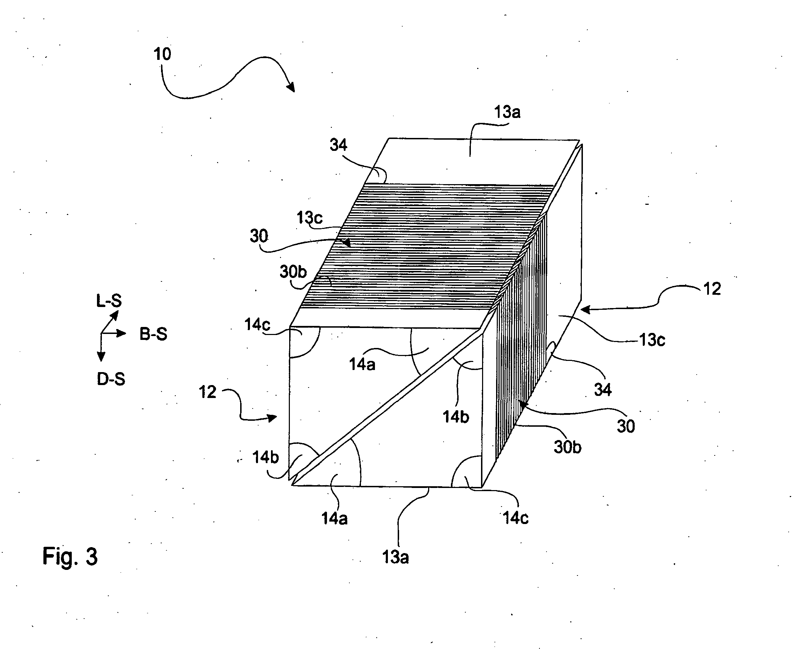

Figure 3 shows a combination of two profiled beams 12, as they are represented in Figure 2. In this arrangement the two profiled beams 12 form a reinforcement device 10. The arrangement in accordance with the present invention includes the two profiled beams 12, in that they are opposed with the respective side surfaces 13b, which both form at least one arm of an acute-angled side surface angle 14a or 14b. In the present case one is dealing in each case with a triangular profile cross-section of the corresponding profiled beam 12, wherein in each case this triangle has a right-angled side surface angle 14c. Thus the hypotenuses of the side surfaces 13b of the respective profiled beam 12 formed in each case are located opposite one another geometrically, so to speak. As can be discerned from Figure 3, the normal force can in this manner be transferred around the reinforcement device 10, as fundamentally also takes place in reinforcement devices of known art. Here the corresponding fibres or rovings 30b of the ensheathment 30 run in normal directions, or crosswise thereto. However an additional direction for the accommodation of force and/or stress is formed along the side surfaces 13a of the respective profiled beam 12 by the two-part design of the reinforcement device 10. The fibres or rovings 30b that are located on the side surface 13a of the respective profiled beam 12 are accordingly designed by means of their alignment to accommodate forces or stresses in this direction. Thus a reinforcement device 10 in accordance with the form of embodiment in Figure 3 receives a further direction in which forces or stresses can be transferred.

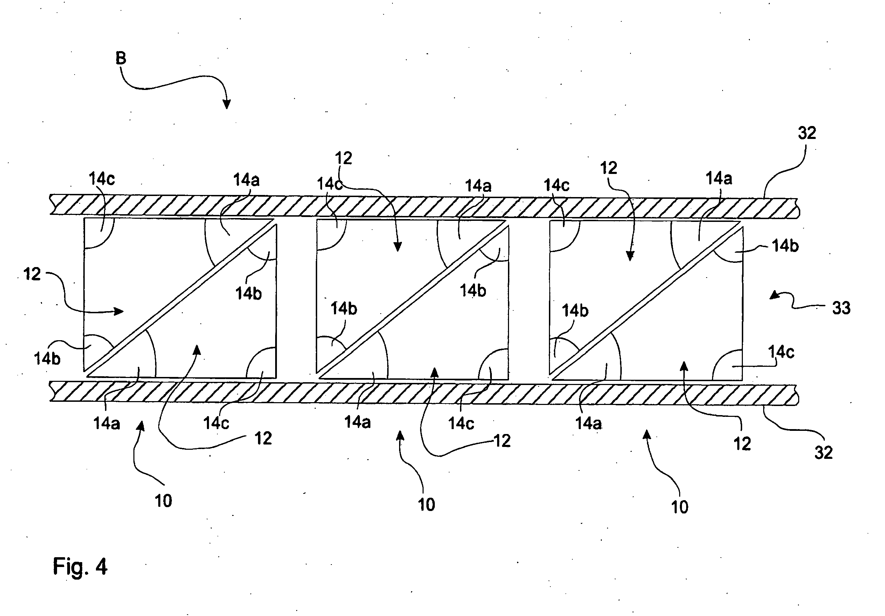

Figure 4 shows a form of embodiment of an inventive main load-bearing covering panel B. This is embodied in a sandwich form of construction and has two skin sections 32 that are areally connected together via a core layer 33. Here the core layer 33 is embodied in a particularly light manner, in particular in the form of a foam, for example a plastic foam. Embedded into the core layer 33, thus, for example, into the plastic foam, three reinforcement devices 10 can be discerned in the form of embodiment in Figure 4. The skin sections 32 can in particular be made of a carbon-based material and can in particular be made of fibre-reinforced material.

Each of these reinforcement devices 10 is thereby essentially embodied in a manner that has been elucidated in the context of the form of embodiment in Figure 3. Here too two profiled beams 12 are located, in each case arranged relative to one another such that side surfaces 13a are located opposite one another, which form at least one arm of an acute-angled side surface angle 14a or 14b. In the form of embodiment of Figure 4 the triangular profile cross-sections of the respective profiled beam 12 are designed as essentially right-angled triangles, and thus are provided with a third side surface angle 14c, which is designed essentially as a right angle. In this manner rectangular overall cross-sections ensue for the respective reinforcement device 10, so that thus the essentially parallel designs of the skin sections 32 of the main load-bearing covering panel B can also be reproduced. Thus the side surfaces of all profiled beams 12 either run at right-angles, that is to say along the shortest distance connecting the two skin sections 32, or crosswise to this direction, or at an acute angle to the latter. Thus the directions are defined in which forces and/or stresses in the core layer 33 can be accommodated by the reinforcement device 10.

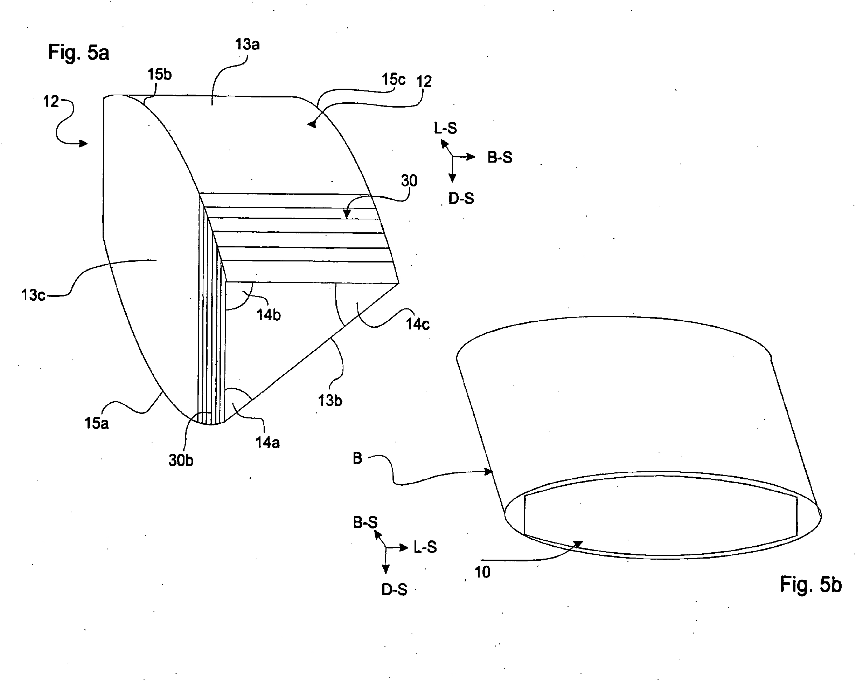

In Figures 5a and 5b one possibility is represented as to how curved surfaces of a main load-bearing covering panel B can be reproduced in one form of embodiment of the present invention. Figure 5b thus shows a main load-bearing covering panel B that has a curved surface. In order to follow this curvature, that is to say, in particular to keep the separation distance between the respective side surfaces 13a, 13b and 13c of each reinforcement device 10 and the respective skin section 32 of the main load-bearing covering panel B as small as possible, it is necessary that the corresponding side surface and/or the corresponding side edge of the respective profiled beam 12 follows this curvature. In order to make this possible a form of embodiment is conceivable, for example, as is represented in Figure 5a. In order to achieve this the side edges 15a, 15b and 15c, which are formed in each case at the abutments between the adjacent side surfaces 13a, 13b und 13c, are shaped in a curved manner. The curvature thereby follows the curvature of the skin sections 32 of the main load-bearing covering panel B.

Here the curved surfaces of the main load-bearing covering panel (B) as viewed in the longitudinal direction (L-S) form symmetrically first an increasing and then a decreasing cross-section. In particular an elliptical or lenticular shape of the main load-bearing covering panel (B) is thereby formed.

The curvature of the respective side edge 15a, 15b and 15c has the result that on the one hand the respective side edge 15a, 15b and 15c is curved, moreover one of the three side surfaces 13a, 13b and 13c, namely the side surface 13c, overall also has a camber, that is to say, a curvature. In this form of embodiment the other two side surfaces 13a and 13b remain essentially plane, although this can be otherwise in other forms of embodiment. The form of embodiment as per Figure 5a has the further advantage that an inventive arrangement can take place in a simple manner by means of the side surfaces 13a with a small separation distance from a corresponding profiled beam 12, as represented in Figures 1 to 4, since this side surface 13b is essentially plane. Also the arrangement with closest proximity to an adjacent reinforcement device 10, as can be discerned in Figure 4, is possible by virtue of the essentially plane side surface 13b without further effort. In this manner a design is thus achieved, without any impairment of the inventive quality of the reinforcement device 10, in particular of the profiled beam 12, for the purpose of matching to the curvature of the skin sections 32 of the main load-bearing covering panel B. In this form of embodiment the curvature takes the form of a curvature of the covering panel B, in particular of its skin sections 32, which represents a curvature about the width direction B-S.

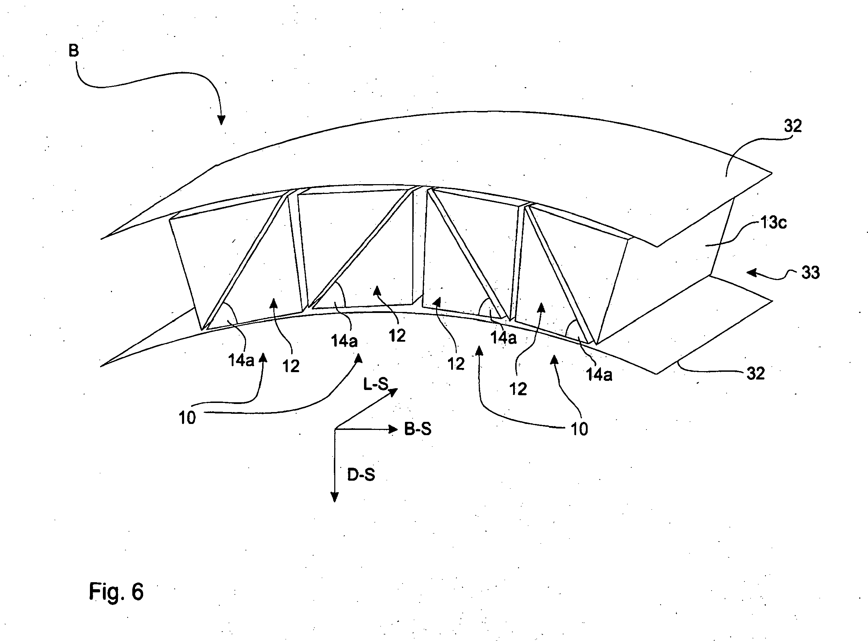

Needless to say, it is also possible to form a curvature about the longitudinal direction L-S of the reinforcement device 10, that is to say, of the profiled beam 12. However, this is advantageously formed not by means of curved surfaces 15a, 15b or 15c, but rather by means of a matching of the corresponding side surface angles 14a, 14b and 14c. As represented in Figure 6, the side surface angles 14a used for the individual reinforcement devices 10 differ from one another as little as possible. As a result of the small differences between the side surface angles 14a distorted right angles arise in the overall cross-section for the respective reinforcement device 10, that is to say, a distortion of what were previously right-angled triangles in the profile cross-section of the respective profiled beam 12.This distortion follows, so to speak, the positioning of the respective side surface 13c, which runs along the shortest distance connecting the two skin sections 32. Thus as a result of the matching of the side surface angle 14a, and also of the further side surface angles 14b and 14c, matching to the curvature of the skin sections 32 of the main load-bearing covering panel B represented in Figure 6 follows, without the individual side surfaces 13a, 13b or 13c themselves having to be curved. In this manner a curvature as represented in Figure 6, that is to say a curvature of the main load-bearing covering panel B, which extends about the longitudinal direction L-S of the reinforcement devices 10, that is to say, of the profiled beam 12, can be reproduced particularly simply.

Needless to say, it is also possible within the framework of the present invention to fit more complex curved main load-bearing covering panels B with inventive reinforcement devices, in particular if the curvatures take the form of a combination of a camber about the longitudinal direction L-S and about the longitudinal direction B-S. Accordingly a combination of the forms of embodiment as per Figure 5 and Figure 6 can enable such complex curvatures of the main load-bearing covering panel B also to be reproduced and thus reinforced with a reinforcement device 10.

It is obvious that the above-described forms of embodiment are only exemplary configurations of the present invention. Needless to say, the individual forms of embodiment or parts thereof can be freely combined with one another, insofar as this is technically practical.

### Reference symbols

- 1: Structural component
- 10: Reinforcement device
- 12: Profiled beam
- 13a: Side surface
- 13b: Side surface
- 13c: Side surface
- 14a: Side surface angle
- 14b: Side surface angle
- 14c: Side surface angle
- 15a: Side edge
- 15b: Side edge
- 15c: Side edge
- 30: Ensheathment
- 30b: Fibre or roving
- 33: Core layer
- 34: Fibre angle
- b: Main load-bearing covering panel

## Claims

1. A reinforcement device (10) for the purpose of reinforcing a main load-bearing covering panel (B), comprising
at least two profiled beams (12) extending in a beam longitudinal direction (L) and in each case having a profile cross-section and at least three side surfaces (13a, 13b, 13c) extending in the beam longitudinal direction (L), which in each case subtend a side surface angle (14a, 14b, 14c) between each pair of side surfaces (13a, 13b, 13c), wherein at least two adjacently located side surfaces (13a, 13b) are arranged relative to one another such that the side surface angle (14a) subtended by them is formed as an acute angle, and
wherein the two profiled beams (12) are arranged relative to one another such that two side surfaces (13b) of each profiled beam (12) are located facing one another, which in each case have at least one arm of an acute side surface angle (14a), **characterized in that** the reinforcement device comprises at least one ensheathment (30) for each profiled beam (12), which in at least one or a plurality of sections has one or a plurality of fibres or rovings (30 b), which rotate along the side surfaces (13a, 13b, 13c) and around the latter in the peripheral direction of the respective profiled beam (12).

2. The reinforcement device (10) in accordance with Claim 1, **characterised in that** the alignment of the fibres or rovings (30b) of the ensheathment (30) is embodied such that a fibre angle (34) in the range from 85 to 95° is formed between the respective fibre or roving (30b) and a side edge (15a, 15b, 15c) of the profiled beam (12).

3. The reinforcement device (10) in accordance with one of the preceding claims, **characterised in that** the side surfaces (13a, 13b, 13c) of each profiled beam (12) are arranged relative to one another such that a profile cross-section is designed in the form of a right-angled triangle.

4. The reinforcement device (10) in accordance with one of the preceding claims, **characterised in that** the at least one acute side surface angle (14a) is designed such that when deployed in the main load-bearing covering panel the side surfaces (13b) facing one another of the two profiled beams (12) extend along the direction of the greatest transverse stress in the main load-bearing covering panel (B) when under load.

5. The reinforcement device (10) in accordance with one of the preceding claims, **characterised in that** the fibres or rovings (30b) of the ensheathment (30) are wound around the respective profiled beam (12) in at least one or a plurality of sections.

6. The reinforcement device (10) in accordance with one of the preceding claims, **characterised in that** the fibres or rovings (30b) of the ensheathment (30) are woven around the respective profiled beam (12) in at least one or a plurality of sections.

7. The reinforcement device (10) in accordance with one of the preceding claims, **characterised in that** at least one of the side surfaces (13a, 13b, 13c) and/or at least one of the side edges (15a, 15b, 15c) of at least one of the profiled beams (12) has a curvature in one direction, which is configured such that it corresponds with a curvature of a surface of a structural component (1), which is covered with a main load-bearing covering panel (B) reinforced by at least one reinforcement device (10).

8. A main load-bearing covering panel (B) for a structural component (1) of a flow body, wherein the covering panel (B) is formed as a sandwich from an inner skin section (31), an outer skin section (32), and also a core layer (33), accommodating transverse load, located between them, which areally connects the inner and the outer skin section (32) with one another,
**characterised in that** a plurality of reinforcement devices (10) with the features of one of the Claims 1 to 7 are integrated in the main load-bearing covering panel (B), for the purpose of controlling transverse stresses in the core layer.

9. The main load-bearing covering panel (B) in accordance with Claim 8, **characterised in that** the individual reinforcement devices (10) are integrated in the core layer (33) of the main load-bearing covering panel (B) such that in each case side surfaces (13b) of the profiled beams (12), which stand at right-angles with reference to the width direction (B-S) of the profiled beams (12) of the respectively adjacent reinforcement devices (10), are located opposite one another.

10. The main load-bearing covering panel (B) in accordance with one of the Claims 8 or 9, **characterised in that** the magnitude of the at least one acute side surface angle (14a) of each profiled beam (12) of a reinforcement device (10) differs from the magnitude of the at least one acute side surface angle (14a) of each profiled beam (12) of at least one other reinforcement device (10).

11. A structural component (1) of a flow body, with at least one main load-bearing covering panel (B) in accordance with one of the Claims 8 to 10, and a supporting structure for purposes of attaching the covering panel (B).

12. A flow body, with a structural component (1) and a main load-bearing covering panel (B) ensheathing the former in at least one or a plurality of regions, wherein the main load-bearing covering panel (B) is designed in accordance with one of the Claims 8 to 10.

## Patentansprüche

1. Verstärkungsvorrichtung (10) zur Verstärkung einer Hauptlast tragenden Beplankungsschale (B), aufweisend
zwei Profilträger (12), die sich in einer Trägerlängsrichtung (L) erstrecken, mit jeweils einem Profilquerschnitt, der von zumindest drei Seitenflächen (13a, 13b, 13c) begrenzt wird, die sich in der Trägerlängsrichtung erstrecken und die jeweils einen Seitenflächenwinkel (14a, 14b, 14c) zwischen jeweils einem Paar von Seitenflächen (13a, 13b, 13c) einschließen, wobei wenigstens zwei benachbart gelegene Seitenflächen (13a, 13b) derart zueinander angeordnet sind, dass der dazwischen eingeschlossene Seitenflächenwinkel (14a) spitzwinklig ausgebildet ist,
wobei die beiden Profilträger (12) derart zueinander angeordnet sind, dass zwei Seitenflächen (13b) jedes Profilträgers (12) einander zugewandt liegen, die jeweils zumindest einen Schenkel eines spitzwinkligen Seitenflächenwinkels (14a) aufweisen, **dadurch gekennzeichnet, dass** die Verstärkungsvorrichtung wenigstens eine Ummantelung (30) für jeden Profilträger (12) aufweist, die zumindest in einem oder einer Mehrzahl von Abschnitten eine oder mehrere Fasern oder Rovinge (30b) aufweist, die entlang der Seitenflächen (13a, 13b, 13c) in Profilumfangsrichtung des jeweiligen Profilträgers (12) diesen umlaufen.

2. Verstärkungsvorrichtung (10) nach Anspruch 1, **dadurch gekennzeichnet, dass** die Ausrichtung der Fasern oder Rovinge (30b) der Ummantelung (30) derart ausgeführt ist, dass zwischen der jeweiligen Faser oder Roving (30b) und einer Seitenkante (15a, 15b, 15c) des Profilträgers (12) ein Faserwinkel (34) im Bereich von 85 bis 95° ausgebildet wird.

3. Verstärkungsvorrichtung (10) nach einem der vorangegangenen Ansprüche, **dadurch gekennzeichnet, dass** die Seitenflächen (13a, 13b, 13c) jedes Profilträgers (12) derart zueinander angeordnet sind, dass sich ein Profilquerschnitt in der Form eines rechtwinkligen Dreiecks ausbildet.

4. Verstärkungsvorrichtung (10) nach einem der vorangegangenen Ansprüche, **dadurch gekennzeichnet, dass** der wenigstens eine spitzwinklige Seitenflächenwinkel (14a) derart ausgebildet ist, dass die einander zugewandten Seitenflächen (13b) der beiden Profilträger (12) beim Einsatz in der Hauptlast tragenden Beplankungsschale (B) sich entlang der Richtung der größten Schubspannung in der Hauptlast tragenden Beplankungsschale (B) im Belastungsfall erstrecken.

5. Verstärkungsvorrichtung (10) nach einem der vorangegangenen Ansprüche, **dadurch gekennzeichnet, dass** die Fasern oder Rovinge (30b) der Ummantelung (30) in zumindest einem oder einer Mehrzahl von Abschnitten um den jeweiligen Profilträger (12) gewickelt sind.

6. Verstärkungsvorrichtung (10) nach einem der vorangegangenen Ansprüche, **dadurch gekennzeichnet, dass** die Fasern oder Rovinge (30b) der Ummantelung (30) in zumindest einem oder einer Mehrzahl von Abschnitten um den jeweiligen Profilträger (12) geflochten sind.

7. Verstärkungsvorrichtung (10) nach einem der vorangegangenen Ansprüche, **dadurch gekennzeichnet, dass** wenigstens eine der Seitenflächen (13a, 13b, 13c) und/oder wenigstens einer der Seitenkanten (15a, 15b, 15c) des Profilträgers (12) zumindest eines der Profilträger (12) eine Krümmung in einer Richtung aufweist, die derart ausgestaltet ist, dass sie mit einer Krümmung einer Oberfläche eines Strukturbauteils (1) korrespondiert, welches mit einer durch zumindest eine Verstärkungsvorrichtung (10) verstärkte Hauptlast tragende Beplankungsschale (B) beplankt ist.

8. Hauptlast tragende Beplankungsschale (B) für ein Strukturbauteil (1) eines Strömungskörpers, wobei die Beplankungsschale (B) als Sandwich aus einem inneren Hautabschnitt (31), einem äußeren Hautabschnitt (32) sowie einer zwischen diesen gelegenen schublast aufnehmende Kernschicht (33) gebildet ist, die den inneren und den äußeren Hautabschnitt (32) flächig miteinander verbindet,
**dadurch gekennzeichnet, dass** in der Hauptlast tragenden Beplankungsschale (B) zum Zwecke der Beeinflussung von Schubspannungen in der Kernschicht mehrere Verstärkungsvorrichtungen (10) mit den Merkmalen eines der Ansprüche 1 bis 7 integriert sind.

9. Hauptlast tragende Beplankungsschale (B) nach Anspruch 8, **dadurch gekennzeichnet, dass** die einzelnen Verstärkungsvorrichtungen (10) derart in die Kernschicht (33) der Hauptlast tragenden Beplankungsschale (B) integriert sind, dass jeweils mit Bezug auf die Breitenrichtung (B-S) des Profilträgers (12) senkrecht stehende Seitenflächen (13b) der Profilträger (12) von jeweils benachbarten Verstärkungsvorrichtungen (10) einander gegenüberliegen.

10. Hauptlast tragende Beplankungsschale (B) nach einem der Ansprüche 8 oder 9, **dadurch gekennzeichnet, dass** der Betrag des zumindest einen spitzwinkligen Seitenflächenwinkels (14a) jedes Profilträgers (12) einer Verstärkungsvorrichtung (10) sich vom Betrag des zumindest einen spitzwinkligen Seitenflächenwinkels (14a) jedes Profilträgers (12) wenigstens einer anderen Verstärkungsvorrichtung (10) unterscheidet.

11. Strukturbauteil (1) eines Strömungskörpers mit zumindest einer Hauptlast tragenden Beplankungsschale (B) nach einem der Ansprüche 8 bis 10 und einer Trägerstruktur zur Befestigung der Beplankungsschale (B).

12. Strömungskörper mit einem Strukturbauteil (1) und einer dieses zumindest bereichsweise ummantelnden Hauptlast tragenden Beplankungsschale (B), wobei die Hauptlast tragende Beplankungsschale (B) nach einem der Ansprüche 8 bis 10 ausgebildet ist.

## Revendications

1. Dispositif de renforcement (10) dans le but de renforcer un panneau principal de recouvrement porteur de charge (8) comprenant:
au moins deux poutres profilées (12) qui s'étendent dans une direction longitudinale de poutre (L) et dans chaque cas ayant une section transversale de profil et au moins trois surfaces de côté (13a, 13b, 13c) qui s'étendent dans la direction longitudinale de poutre (L) qui, dans chaque cas, sous-tendent un angle de surface de côté (14a, 14b, 14c) entre chaque paire de surfaces de côté (13a, 13b, 13c), au moins deux surfaces de côté situées de manière adjacente (13a, 13b) étant arrangées l'une par rapport à l'autre de telle manière que l'angle de surface de côté (14a) sous-tendu par celles-ci est formé comme un angle aigu,
les deux poutres profilées (12) étant arrangées l'une par rapport à l'autre de telle manière que deux surfaces de côté (13b) de chaque poutre profilée (12) sont situées en face l'une de l'autre et ayant, dans chaque cas, au moins un bras d'un angle aigu de surface de côté (14a),
**caractérisé en ce que** le dispositif de renforcement comprend au moins un gainage (30) pour chaque poutre profilée (12) qui a, dans au moins une ou une pluralité de sections, une ou une pluralité de fibres ou de stratifils (30b) qui tournent le long des surfaces de côté (13a, 13b, 13c) et autour des dernières dans la direction périphérique de la poutre profilée respective (12).

2. Dispositif de renforcement (10) selon la revendication 1, **caractérisé en ce que** l'alignement des fibres ou des stratifils (30b) du gainage (30) est réalisé tel qu'un angle de fibres (34) de l'ordre de 85 à 95° est formé entre la fibre ou le stratifil respectif (30b) et un bord de côté (15a, 15b, 15c) de la poutre profilée (12).

3. Dispositif de renforcement (10) selon l'une des revendications précédentes, **caractérisé en ce que** les surfaces de côté (13a, 13b, 13c) de chaque poutre profilée (12) sont arrangées l'une par rapport à l'autre de telle manière qu'une section transversale de profil est conçue en forme de triangle à angle droit.

4. Dispositif de renforcement (10) selon l'une des revendications précédentes, **caractérisé en ce que** l'angle aigu de surface de côté qui existe au moins (14a) est conçu tel que, lorsqu'il est déployé dans le panneau principal de recouvrement porteur de charge, les surfaces de côté (13b) en face l'une de l'autre des deux poutres profilées (12) s'étendent le long de la direction de la plus grande tension transversale dans le panneau principal de recouvrement porteur de charge (B) lorsqu' il est chargé.

5. Dispositif de renforcement (10) selon l'une des revendications précédentes, **caractérisé en ce que** les fibres ou stratifils (30b) du gainage (30) sont enroulés autour de la poutre profilée respective (12) dans au moins une ou une pluralité de sections.

6. Dispositif de renforcement (10) selon l'une des revendications précédentes, **caractérisé en ce que** les fibres ou stratifils (30b) du gainage (30) sont tissés autour de la poutre profilée respective (12) dans au moins une ou une pluralité de sections.

7. Dispositif de renforcement (10) selon l'une des revendications précédentes, **caractérisé en ce qu'**au moins l'une des surfaces de côté (13a, 13b, 13c) et/ou au moins l'un des bords de côté (15a, 15b, 15c) d'au moins l'une des poutres profilées (12) a une courbure dans une direction qui est configurée telle qu'elle correspond à une courbure d'une surface d'un élément structural (1) qui est couvert avec un panneau principal de recouvrement porteur de charge (B) renforcé par au moins un dispositif de renforcement (10).

8. Panneau principal de recouvrement porteur de charge (B) pour un composant structurel (1) d'un corps d'écoulement, le panneau de recouvrement (B) étant formé comme un sandwich d'une section de revêtement intérieur (21), d'une section de revêtement extérieur (32) et aussi d'une couche de noyau (33), qui loge une charge transversale, située entre elles qui relie en surface la section de revêtement intérieur et la section de revêtement extérieur (32) l'une à l'autre, **caractérisé en ce qu'**une pluralité de dispositifs de renforcement (10) avec les caractéristiques de l'une des revendications 1 à 7 est intégrée dans le panneau principal de recouvrement porteur de charge (B) dans le but de contrôler des tensions transversales dans la couche de noyau.

9. Panneau principal de recouvrement porteur de charge (B) selon la revendication 8, **caractérisé en ce que** les dispositifs de renforcement individuels (10) sont intégrés dans la couche de noyau (33) du panneau principal de recouvrement porteur de charge (B) de telle manière que, dans chaque cas des surfaces de côté (13b) des poutres profilées (12) qui sont à angle droit par rapport à la direction de largeur (B-S) des poutres profilées (12) des dispositifs de renforcement respectivement adjacents (10) sont situées en face l'une de l'autre.

10. Panneau principal de recouvrement porteur de charge (B) selon l'une des revendications 8 ou 9, **caractérisé en ce que** la magnitude de l'angle aigu de surface de côté qui existe au moins (14a) de chaque poutre profilée (12) d'un dispositif de renforcement (10) diffère de la magnitude de l'angle aigu de surface de côté qui existe au moins (14a) de chaque poutre profilée (12) d'au moins un autre dispositif de renforcement (10).

11. Composant structurel (1) d'un corps d'écoulement avec au moins un panneau principal de recouvrement porteur de charge (B) selon l'une des revendications 8 à 10 et une structure de support dans le but d'attacher le panneau de recouvrement (B).

12. Corps d'écoulement avec un composant structurel (1) et un panneau principal de recouvrement porteur de charge (B) qui gaine celui-ci dans au moins l'une ou une pluralité de régions, le panneau principal de recouvrement porteur de charge (B) étant conçu selon l'une des revendications 8 à 10.
